# EUROPEAN PATENT APPLICATION

(11) **EP 1 901 223 A1**
(43) Date of publication of application: **19.03.2008**
(21) Application number: 07017316.6
(22) Date of filing: 04.09.2007
(51) Int. Cl.: G06Q 30/00

(54) **Continuous clock auction with proxy bidding**

(30) Priority: 05.09.2006 US 470215
(71) Applicant: Auction Technologies, Inc., Tiburon CA 94920 (US)
(72) Inventor: Salant, David, Tiburon, CA 94920 (US); Milgrom, Paul, Stanford, CA 94305 (US)
(74) Representative: Schoppe, Fritz

(57) **Abstract**

A continuous clock auction with proxy bidding can be a forward auction or a reverse auction, for one or more products. An auction manager determines initial eligibility for each bidder, and sets a starting price for each product. At the initial starting price(s), bidders submit initial offers for each product. A bidder's initial offer cannot exceed his initial eligibility. Bidders may also specify proxy bids, comprising all or part of a bidding strategy. Bidding occurs in a sequence of rounds. At the end of a round, the next round begins. Thus, the clock runs continuously. At the end of each round, the auction manager adjusts the prices based on demand. After each price change, bidders can adjust their bids. The auction ends when prices reach the point at which no product is over-subscribed.

## Description

### Priority Claim and Related Application

This patent application claims the benefit of provisional application serial number 60/713,631, titled "Method and Apparatus for Continuous Clock Auction," filed on September 2, 2005, the entirety of which is hereby incorporated by reference.

### Technical Field

This invention pertains generally to simultaneous clock auctions, and more specifically to continuous clock auctions with proxy bidding.

### Background

Simultaneous clock auctions are designed for the simultaneous auctioning of multiple objects. A simultaneous ascending clock auction is generally used for the simultaneous sale of a set of objects or lots. A simultaneous descending clock auction is generally used for the simultaneous procurement of a set of objects or lots. Both are based on the Simultaneous Multiple Round (SMR) auction format developed by the United Federal Communications Commission for the first spectrum auctions in 1994. The discrete round Simultaneous Descending Clock Auction (SDCA) is described, for example, in Loxley and Salant "Default Service Auctions," Journal of Regulatory Auctions, 26:2 201-229 (2004).

In general, a simultaneous clock auction process begins with the auction manager publishing, posting or otherwise informing potential bidders of the types of products to be auctioned, the number of lots of each product and possibly a starting price for each product. The auction manager may assign eligibility units to each lot. Before the auction begins, bidders typically submit applications to the auction manager. The applications include information required by the auction manager to determine bidder eligibility, such as proof of ability to meet obligations incurred during the auction.

Based on the applications, the auction manager determines for each bidder an aggregate eligibility, that is, an aggregate number of units, lots or eligibility points that the bidder can win during the auction. In addition, the auction manager may limit the number of units or lots that a bidder can win of any one product.

In clock auctions, bidders never name prices, only quantities. Prices are named by the auction manager. Before the start of the first round, the auction manager announces a starting price for each product. In the first round, bidders specify desired quantities. Just before the start of each subsequent round, the auction manager announces the prices for each product for the coming round, called the *current prices.* During each round bidders specify one or more lists indicating the quantities they desire of each product at the *current price.* After each round, the auction manager announces or posts the round results and the prices for the following round. The bidders can maintain or decrease their quantity offers, or they can switch among products, subject to activity rules described below. The auction ends when the bid quantity for every product falls to or below the auction volume for each of the products.

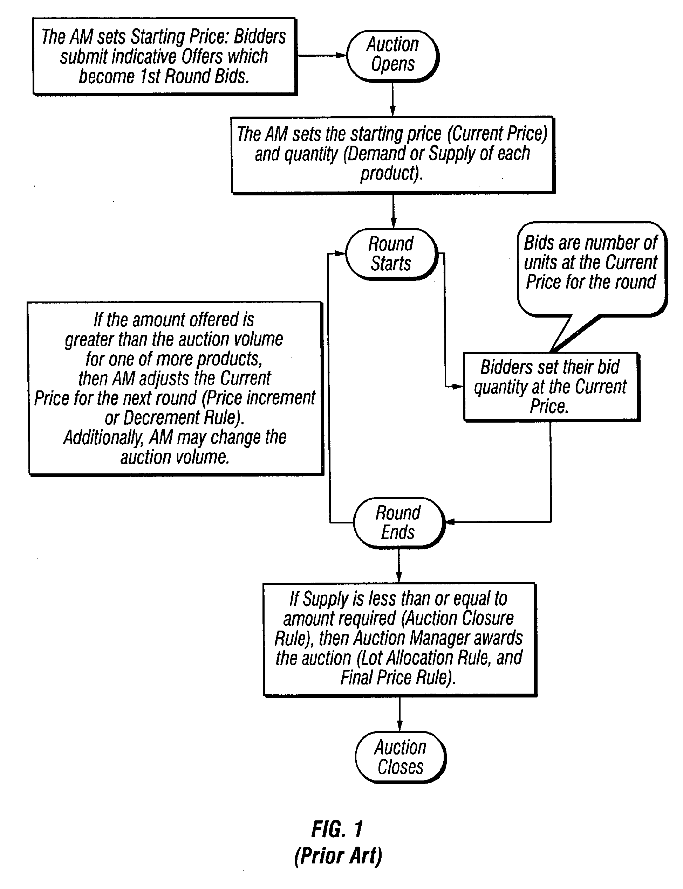

The process that is used in a discrete round standard clock auction is illustrated in Figure 1, and rules governing such an auction are outlined in Table 1. The auction occurs in a series of stages or rounds:
1) The auction manager sets the initial round *current prices (starting prices)* for each product prior to the start of the auction;
2) Bidders submit quantities they want to win for each product at the starting prices (*indicative offers*) which becomes their default bids in Round 1;
3) If quantity bid exceeds the auction volume for one or more products, the auction moves to Round 2;
4) The auction manager adjusts the *current prices* based on the *price increment or decrement rule,* which governs the amount the current price increases or decreases in each round according to the level of excess supply, and bidders keep or revise their current bids;
5) Bidders submit the quantities they remain willing to purchase or supply for each product at the new, Round 2, current prices;
6) *The sum of a bidder's bid quantities or eligibility points* across all products, or an increasing function of those amounts, in each round becomes the bidder's *eligibility* in the subsequent round;
7) Bid quantities or eligibility points can stay the same or decrease during the auction, but once a bidder reduces eligibility it can never be regained;
8) Steps 4 through 7 are repeated for each subsequent round;
9) Bidding continues until the aggregate bid quantity for each product is less than or equal to the auction volume, at which time the auction closes;
10) Once the auction is closed, the auction manager awards the auctioned products according to the *lot allocation rule* and *final price rule.*

**Table 1: Clock Auction Rules**

| | |
|---|---|
| **Final Price Rule** | If at the most recent current price before the close of the auction, bid quantity for a product exactly equals its auction volume, then |
| | |
| | ■ Bidders all pay (in a forward auction) or are paid (in a reverse auction) the final announced price for each lot. |
| | |
| | ■ Each bidder's lot allocation for each product is the amount it indicated in the final bidding interval. |
| | |
| | If at the last announced price, bid quantity for a product falls below auction volume, then the price is rolled back to the previous posted priced, and the supply is allocated according to the lot allocation rule. |
| | |
| | Variations in the final price rule are possible. |
| **Lot Allocation Rule** | If, at the last round current posted price, bid quantity for a product is less than auction volume, then allocation is based on the following priorities: |
| | |
| | ■ First, bids at the final posted price are allocated; |
| | |
| | ■ Offers at the penultimate posted price are then prorated; and |
| | |
| | ■ Ties are broken by the bid time stamp or by assigning a pseudo-random number to each bidder. 1. |
| | |
| | Variations in the lot allocation rule are possible. |
| **Price Increment and Decrement Rules** | The auction manager will continue to increase price in a forward auction or decrease price in a reverse auction for any product as long its bid quantity exceeds its auction volume. The auction will close when the total bid quantity for all products is less than or equal to the auction volume. Typically, the auction manager can adjust the price increment or decrement rule during the auction. |
| | |
| | In one possible price adjustment rule, the percentage price change is based on the excess of bid quantity, using the following index for each product: Bid Quantity / Auction Volume = r. The index r is called the eligibility ratio for the product. |
| | |
| | The price adjustment becomes larger with increases in r. A variation of the price adjustment formula uses an average eligibility ratio that takes into account values of the eligibility ratio at earlier rounds. For example, one variation uses exponential smoothing to determine the relevant average eligibility ratio. |
| | |
| | The auction manager typically has the discretion to set a different price than the one specified by this rule to best manage the pace of the auction. |
| | |
| | Variations in the price adjustment rule are possible. |
| **Auction Closure Rule** | The auction manager stops the auction in the first bidding interval in which the bid quantity for each product is no greater than its auction volume. |

### Summary of Invention

A continuous clock auction with proxy bidding is a novel variation of simultaneous clock auctions and other clock proxy auctions. A continuous clock auction with proxy bidding can be for multiple units of one or more products. The auction can be a forward auction (that is, an auction to sell a different number of units of a set of products) or a reverse auction (that is, an auction to purchase a different number of units of a set of products).

An auction manager determines initial eligibility for each bidder. A bidder's initial eligibility for a product is the quantity of the product that the bidder can win. The auction manager sets a starting price for each product. At the initial starting price(s), bidders send initial offers for each product through the auction system, which can be phone, fax, email, instant messaging, specific software, etc. A bidder's initial offer cannot exceed his initial eligibility for any one product or in the aggregate. In some embodiments, there is only aggregate eligibility and no separate eligibility for any single product. In other embodiments, there is separate eligibility for each product with no or limited switching across products.

In a continuous clock auction with proxy bidding, bidders may also specify proxy bids. This proxy bidding permits bidders to submit a bidding strategy rather than simply to submit bids. Proxy bids in a continuous clock auction are not a substitute for interactive bidding, but instead provide a supplement thereto to simplify bidding, to ensure timely communication and to reduce the risk of problems arising.

Bidding occurs in a sequence of bid intervals or rounds. At the end of a round, the next round begins. Thus, the clock runs continuously. At the end of each interval, the auction manager adjusts the price for the next interval. In an increasing price auction, prices increase from one interval to the next, and in a decreasing price auction, prices decrease from one interval to the next. Prices are adjusted according to rules based on demand.

After each price change, bidders can, for example, (a) maintain their bid, that is the quantity offered for each product in the auction at the posted prices, (b) reduce activity for one or more products or (c) switch their bid across products. The auction manager can specify that, as a default option after each price change, all bids at the previous round prices will be automatically renewed. The auction manager can specify rules to ensure that eligibility reductions and/or switches do not leave any previously fully or over-subscribed product under-subscribed. The auction ends when prices reach the point at which no product is over-subscribed.

The features and advantages described in this summary and in the following detailed description are not all-inclusive, and particularly, many additional features and advantages will be apparent to one of ordinary skill in the relevant art in view of the drawings, specification, and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

### Brief Description of the Drawings

Figure 1 is a flow chart illustrating the process that is used in a discrete round standard clock auction.

Figure 2 is a flow chart illustrating the steps of a continuous clock auction with proxy bidding, according to some embodiments of the present invention.

Figure 3 is a block diagram illustrating a system for the operation of a continuous clock auction with proxy bidding, according to some embodiments of the present invention.

Figure 4 is a graph illustrating sample auction results for an example forward clock auction, according to some embodiments of the present invention.

Figure 5 is a graph illustrating sample auction results for an example reverse clock auction, according to some embodiments of the present invention.

Figure 6 is a diagram illustrating a user interface presented to bidders in a continuous clock auction with two products, according to some embodiments of the present invention.

Figure 7 is a diagram illustrating a user interface for entering proxy bids in a two product auction, according to one embodiment of the present invention.

The Figures depict embodiments of the present invention for purposes of illustration only. One skilled in the art will readily recognize from the following discussion that alternative embodiments of the structures and methods illustrated herein may be employed without departing from the principles of the invention described herein.

### Detailed Description

A continuous clock auction with proxy bidding is a novel variation on discrete round simultaneous clock auctions. In a continuous clock auction with proxy bidding, the clock runs, or ticks, continuously (or nearly continuously), rather than in discrete rounds that can last an hour or more. Compared to discrete round simultaneous clock auctions, rounds in a continuous clock auction with proxy bidding can be very short and bid decrements or increments can be very small. Additionally, as explained below, in continuous clock auctions with proxy bidding, bidders typically do not need take any action to renew bids. Moreover, in continuous clock auctions, there is no break between bidding intervals, as there is in discrete round clock auctions. In a continuous clock auction, one round or bidding interval can start almost as soon as the previous round ends.

An advantageous manner of proxy bidding is also introduced. This proxy bidding permits bidders to submit a bidding strategy rather than simply to submit bids. Proxy bids in a continuous clock auction are not a substitute for interactive bidding, but instead provide a supplement thereto to simplify bidding, to ensure timely communication and to reduce the risk of problems arising. Proxy bidding within the context of the present invention is described in greater detail below.

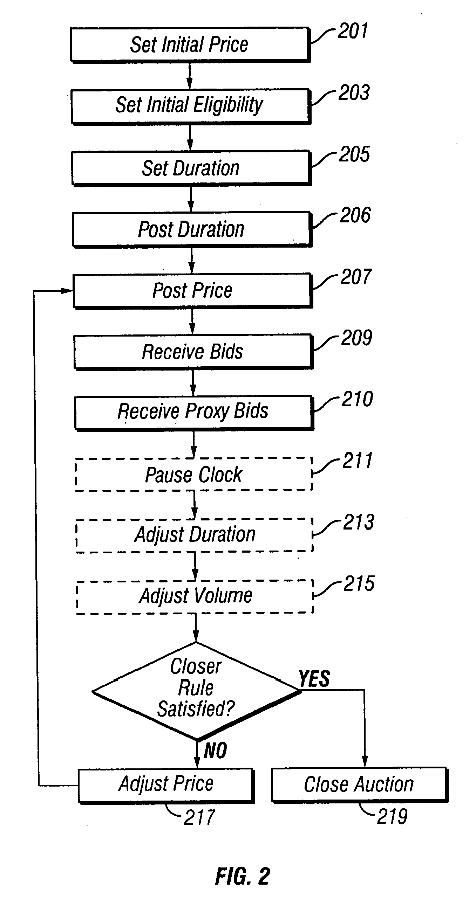

Turning now to Figure 2, steps are illustrated for executing continuous clock auctions with proxy bidding according to some embodiments of the present invention. These steps are explained in greater detail within the context of various specific examples below.

As in simultaneous multiple round auctions, the auction manager sets 201 initial prices and sets 203 an initial eligibility for each bidder. As explained in greater detail below, a continuous clock auction with proxy bidding can involve a single product or multiple products. Where multiple products are involved, the auction manager sets 201 an initial priced for each product, and initial eligibility can be per product or in the aggregate across products.

The auction manager sets 205 the interval of time between price decrements or increments (in other words, how fast the clock ticks). Rounds are typically short. For example, a round can be as short as 30 seconds in duration.

The auction manager informs 206 bidders of the duration of each bidding interval (the time between price adjustments) and posts 207 the current price(s). Based on the above, the auction manager receives 209 bids from the bidders. In some embodiments, the auction manager can pause 211 the auction at any time. In some embodiments, the auction manager can adjust 213 the duration between price adjustments at any time during the auction. In some embodiments, the auction manager can also increase or decrease 215 the auction volume for one or more products. Typically, the auction manager can implement 215 a volume adjustment at any time during the auction.

As part of the bidding process, bidders can typically submit 209 reductions in desired quantity at any time during the auction. In auctions with multiple products, bidders can typically submit 209 switches from one product to another, subject to their total eligibility, and in some embodiments subject to additional activity rules. Eligibility reductions (and typically switches) are allowed as long as they do not leave any product under-subscribed. If a bidder switch or eligibility reduction leaves one or more products under-subscribed, then the auction manager can fully or partially disallow the action, hold the request until it can be granted or until the auction ends, and/or adjust 215 the auction volume.

The auction manager can use various rules for processing reduction and switch requests. One such rule evaluates eligibility reductions and other changes in offers, such as switches, sequentially on a unit by unit basis, so as to ensure no product becomes under-subscribed which was previously fully subscribed.

Switches and reductions can be associated with the current price and processed by the auction manager as soon as they are received or they can have attached prices and be processed when the target price is reached. Another feature is that the auction manager can update bidders as soon as each new bid is processed.

As part of the bidding process, bidders can submit 210 proxy bids. A proxy bid provides instructions to the auction manager about the price or prices at which the bidder wants to reduce quantity bid for one or more products, and/or other circumstances under which to take various actions. In many embodiments of the present invention, after each price adjustment, bid quantities at one price are automatically renewed absent an executed proxy bid instruction, a bid withdrawal, or a bid reduction or switch.

Bidders can adjust 210 their proxy bids during the auction. A bidder can submit 210 a proxy indicating price differential across products at which the bidder would want to switch one or more units from one product to another. The auction manager or auction system can implement any and all proxy bids during the auction.

At the end of each round, if the conditions of the auction closure rule is not satisfied, the auction manager adjusts 217 the current price(s) according to the price adjustment rule, and another round is commenced, starting with step 207. If the auction closure rule is satisfied, the auction ends 219 and the final price and lot allocation rules are executed.

Another feature of continuous clock auctions with proxy bidding is that the auction manager can optionally inform bidders prior to the auction of the planned starting prices, maximum rate of price adjustments, minimum rate of price adjustments (that is, how fast or slow the clock will tick) and the maximum planned auction duration. The starting price and clock speed essentially determines auction duration.

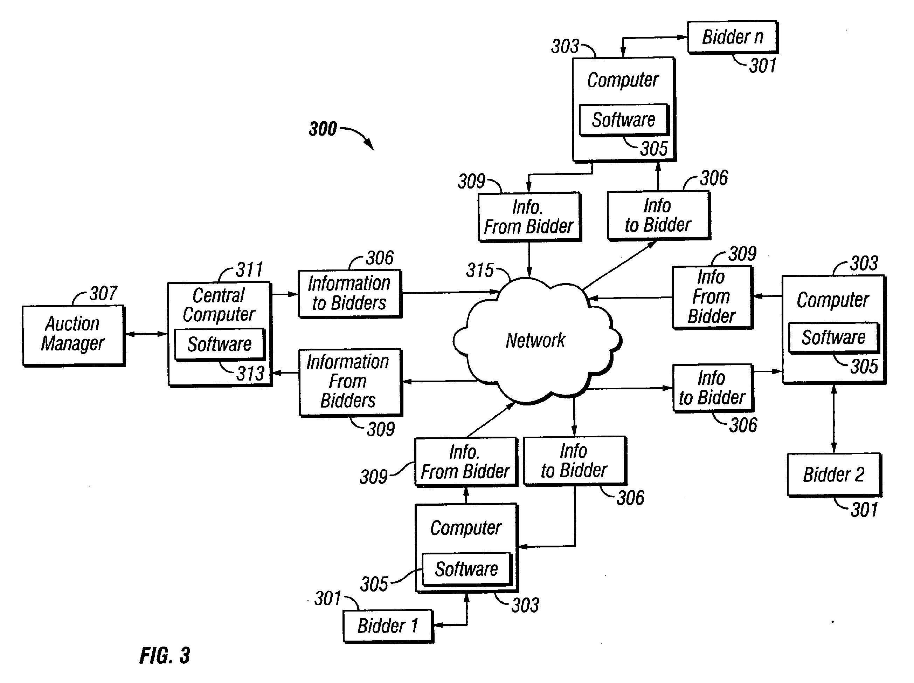

Figure 3 illustrates a system 300 for the operation of the present invention, according to some embodiments. Although the methodology for executing continuous clock auctions with proxy bidding can be executed manually, in some embodiments such auctions are primarily conducted electronically, as illustrated in Figure 3.

In such an embodiment, each bidder 301 operates a computing device 303 such as a programmable microcomputer executing software 305 to view information 306 such as current price posted by the auction manager 307, and to submit information 309 such as bids, as per the current invention. Of course, the computing device 303 can alternatively be in another form, for example a handheld computing device such as a personal digital assistant or a cell phone.

The auction manager 307 operates a central computing device 311 running software 313 to manage an auction as per the current invention. A human auction manager 311 can interact with the computing device 311 and software 313 as appropriate. In some embodiments, some or all of the functions performed by the auction manager 307 can be executed by the software 313 running on the computing device 311. For example, calculations of price adjustments and the like would typically be executed automatically by the software 313. In some embodiments, the software 313 is operated by a human auction manager 307. In other embodiments, the software 313 *is* the auction manager 307.

The computing devices 303, 311 and the software 305, 313 can communicate over any suitable communication network 315, such as the Internet. Communication can be in the form of information 306, 309 sent between software programs 305, 313, emails, instant messages, website, cell phone or other calls, faxes, etc.

For example, in various embodiments of the present invention, bidders 301 can phone, fax, email or instant message quantity bids and other information 309 to the auction manager 311. In other embodiments, bidders 301 can transmit information 309 to the auction manager 311 across the Internet via a browser or other mechanism. The auction manager 311 can post a clock, current prices and other information 306, for example, on a website accessible to the bidders, or by using a conference line.

In some embodiments, bidders 301 can communicate with the auction manager 311, but not with each other. The auction manager 311 can typically communicate with individual bidders 301 and/or all bidders 311 (e.g., through the use of broadcast messages). The auction manager 311 can decide what information 306 (concerning, e.g., all bids) is to be available to each bidder 301. The auction manager 311 can allow all bidders 301 to see rival bids after each price change or round. Alternatively, the auction manager 311 can decide to post only current prices for each product, and no additional information 306 concerning the active bidding process. The auction manager 311 can also post intermediate levels of information 306, such as the number of bidders 301 still active, the identities of the non-active and/or active bidders 301 and exact or approximate levels of remaining eligibility for each bidder 301 by product and/or in aggregate.

The implementation mechanics of automating some or all steps of auctions according to the present invention will be readily apparent to those of ordinary skill in the relevant art in light of this specification. As will be understood by those of such a skill level, components described herein as being implemented in software can also be implemented in hardware, firmware or any combination of the three.

In order to more clearly illustrate specific embodiments and features of the present invention, some examples are herein provided. First, an example of a forward auction scenario is described, to illustrate the basic principles of forward auction format and bidding. In this example scenario:
- Each bidder's initial eligibility is 8000 pounds
- The starting price is $0.18 per pound.
- There are five bidders: b₁, b₂, b₃, b₄, b₅
- The initial price increment is $.005 (which corresponds to high excess demand)
- The total supply is 20,000 pounds
- Excess demand is "high," "moderate" or "low" as it exceeds 14, is less than 14 but more than 7, or is less than 7, respectively.

Round 1: All bidders bid for 8000 pounds at $0.18 resulting in high excess demand. Round 2: The price is increased to $0.185. Bidders b₁-b₄ maintain their bids, and bidder b₅ reduces his bid to 3000. This results in high excess demand. Round 3: The price is increased to $0.19. Bidders b₁-b₃ reduce their bids to 7000, bidder b₄ reduces his bid to 5000 and bidder b₅ maintains his bid at 3000. This results in moderate excess demand. Round 4: The price is increased to $0.1925. All bidders maintain their bids except bidder b₅, who reduces his bid to 2000, resulting in moderate excess demand. Round 5: The price is increased to $0.195. Bidders b₁-b₃ reduce their bids to 6000, bidder b₄ maintains his bid, and bidder b₅ reduces his bid to 1000. This results in low excess demand. Round 6: The price is increased to $0.1963. All bidders maintain their bids, except bidder b₅, who bids for drop out (0 pounds, or *alternately, bidder b₅ does not have to submit any bid to drop out* of *the bidding*). Low excess demand results. Round 7: The price is increased to $0.1972. Bidders b₁, b₂ and b₄ maintain their bids, and bidder b₃ reduces his bid to 4000, resulting in low excess demand. Round 8: The price is increased to $0.20. Bidders b₁, b₂ and b₃ maintain their bids, and bidder b₄ reduces his bid to 4000, resulting in zero excess demand and auction close. Auction Close: The bidders are awarded their final bids at $0.20.

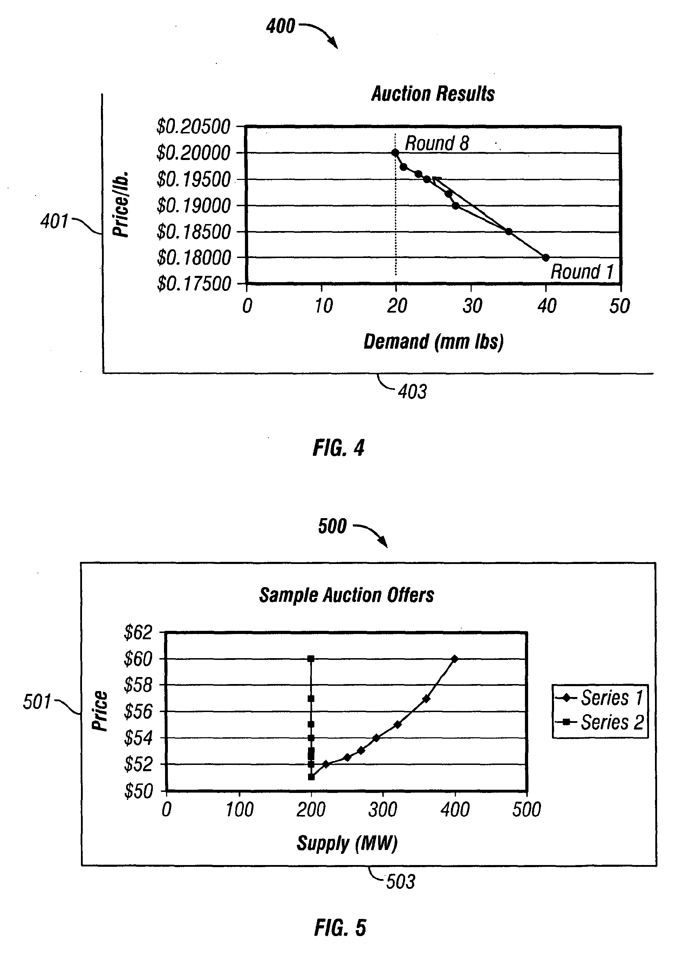

Table 2 illustrates sample auction results for the example forward clock auction described above, where H indicates high excess demand, M indicates medium excess demand and L indicates low excess demand. These results are also illustrated in the form of a graph 400 in Figure 4, in which price is represented by the vertical axis 401 and demand by the horizontal axis 403.

**Table 2**

| **Round** | **Price** | **Excess Demand Reported** | **Actual Demand** | **Excess Demand** |
|---|---|---|---|---|
| 1 | $ 0.1800 | H | 40 | 20 |
| 2 | $ 0.1850 | H | 35 | 15 |
| 3 | $ 0.1900 | M | 29 | 9 |
| 4 | $ 0.1925 | M | 28 | 8 |
| 5 | $ 0.1950 | L | 24 | 4 |
| 6 | $ 0.1963 | L | 23 | 3 |
| 7 | $ 0.1975 | L Auction | 21 | 1 |
| 8 | $ 0.2000 | Over | 20 | 0 |

An example of a reverse continuous clock auction is now described, to illustrate the basic principles of the reverse auction format, and bidding under that scenario.
In this example:
- Each bidder's initial eligibility is 80 M
- The starting price is $60
- There are five bidders: b₁, b₂, b₃, b₄, b₅
- The initial price adjustment is $3 (which corresponds to high excess supply)
- The target volume is 200 M.
- Excess demand is "high," "moderate" or "low" as it exceeds 189, is less than 180 but more than 100, or is less than 100, respectively.

Round 1: All bidders bid for 50 M at $60, resulting in high excess supply. Round 2: The price is decreased to $57. Bidders b₁-b₄ maintain their bids, and bidder b₅ reduces his bid to 40 M, resulting in moderate excess supply. Round 3: The price is decreased to $55. Bidders b₁-b₃ reduce their bids to 70 M, bidder b₄ reduces his bid to 30 M and bidder b₅ maintains bid at 80 M. This results in moderate excess supply. Round 4: The price is decreased to $54. All bidders maintain their bids except bidder b₅, who reduces his bid to 50 M, resulting in low excess supply. Round 5: The price is decreased to $53. Bidders b₁-b₂ reduce their bids to 60 M and bidders b₃, b₄ and b₅ maintain their bids, resulting in low excess supply. Round 6: The price is decreased to $52.50. Bidder b₅ reduces his bid to 30 M. Round 7: The price is decreased to $52. Bidders b₁, b₂, b₃ and b₄ maintain their bids and bidder b₅ drops out, resulting in low excess supply. Round 8: The price is decreased to $51. Bidders b₁, b₂ and b₃ maintain their bids and bidder b₁ reduces his bid to 40 M, resulting in zero excess supply and auction close. Auction Close: The bidders are awarded their final bids at $51.

Table 3 illustrates sample auction results for the example reverse clock auction described above, which are also illustrated as a graph 500 in Figure 5, in which price is represented by the vertical axis 501 and supply by the horizontal axis 503.

**Table 3**

| Round | Price | Report Excess Supply | Auction Supply | Excess Supply |
|---|---|---|---|---|
| 1 | $60 | H | 400 | 200 |
| 2 | $57 | M | 360 | 160 |
| 3 | $55 | M | 320 | 120 |
| 4 | $54 | L | 290 | 90 |
| 5 | $53 | L | 270 | 70 |
| 6 | $52.50 | L | 250 | 50 |
| 7 | $52 | L | 220 | 20 |
| 8 | $51 | Auction Over | 200 | 0 |

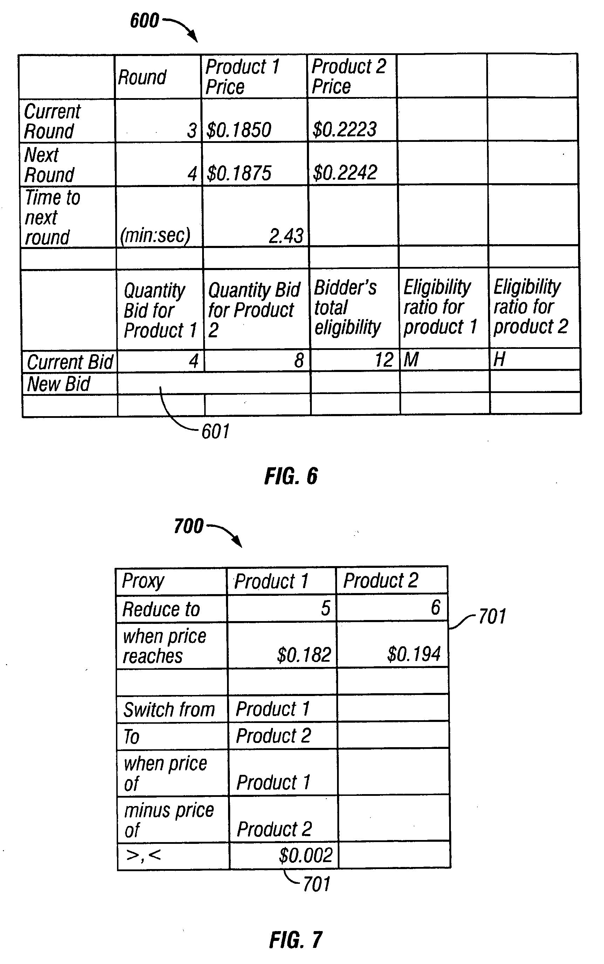

Figure 6 illustrates an example of a user interface 600 presented to bidders in a continuous clock auction with two products, according to some embodiments of the present invention. The example illustrated in Figure 6 is based on the auction of Table 2. However, in the example illustrated in Figure 6, instead of one product there are two. In this example, each bidder sees only the current round, next round prices for each product, the time to the next price increment, and an indication of excess demand (H = high, M = medium and L = low). In the shaded area 601, the bidder can submit revised bids, including reductions of eligibility and switches.

Figure 7 illustrates an example of an interface 700 for entering proxy bids in a two product auction, according to one embodiment of the present invention. The shaded areas 701 are those that can be filled in by the bidder. The proxy bidding in this example allows reductions of activities and switches.

Table 4 illustrates a sample auction history for a two product continuous clock auction, according to one embodiment of the present invention.

**Table 4**

| Round | Product 1 Price | Bidder's offer quantity for product 1 | Eligibility ratio for product 1 | Product 2 Price | Bidder's offer quantity for product 2 | Eligibility ratio for product 2 | Bidder's total eligibility |
|---|---|---|---|---|---|---|---|
| 1 | $ 0.1800 | 6 H | | $ 0.2059 | 6 M | | 12 |
| 2 | $ 0.1825 | 5 M | | $ 0.2078 | 7 H | | 12 |
| 3 | $ 0.1850 | 4 H | | $ 0.2098 | 8 L | | 12 |
| 4 | $ 0.1875 | 5 H | | $ 0.2109 | 6 M | | 12 |
| 5 | $ 0.1900 | 5 M | | $0.2122 | 6 M | | 11 |
| 6 | $ 0.1913 | 6 H | | $0.2127 | 4 M | | 11 |
| 7 | $ 0.1925 | 6 M | | $ 0.2138 | 4 L | | 10 |
| 8 | $ 0.1938 | 6 L | | $ 0.2153 | 3 M | | 10 |
| 9 | $ 0.1950 | 5 M | | $ 0.2169 | 3 L | | 9 |
| 10 | $ 0.1957 | 4 L | | $ 0.2188 | 2 M | | 8 |
| 11 | $ 0.1963 | 4 M | | $ 0.2191 | 3 L | | 6 |
| 12 | $ 0.1969 | 3 M | | $ 0.2197 | 2 M | | 7 |
| 13 | $ 0.1975 | 3 L | | $ 0.2201 | 2 M | | 5 |
| 14 | $ 0.1990 | 2 L | | $ 0.2209 | 2 L | | 5 |
| 15 | $ 0.2000 | 2 | 0 | $ 0.2225 | 2 | 0 | 4 |

As a final example, a multi-product simultaneous descending clock auction with proxy bidding scenario will be described, according to one embodiment of the present invention. Specific bidding and other rules of this scenario are described to illustrate examples of these. In this example, multiple bidders compete to sell the products outlined in Table 5.

**Table 5**

| Product - Duration | 12 month | 2 year | 3 year | 5 year |
|---|---|---|---|---|
| Product 1 | 25 units | 25 units | 50 units | |
| Product 2 | | 25 units | | |
| Product 3 | | 50 units | | 75 units |

The bidders compete to sell up to 250 units of the six products in the auction: 25 units of a twelve month commitment to supply product 1, twenty-five units of a two year commitment to supply product 1, fifty units of a three-year commitment to supply product 1, twenty-five units of a 2 year commitment to supply product 2, fifty units of a 2 year commitment to supply product 3 and seventy five units of a five year commitment to supply product 3.

The auction manager sets prices; bidders only submit quantity offers, which must be in integer amounts. A bid comprises an offered number of units of each of the six products being purchased in the auction. The auction manager also sets the starting time and duration of each round.

The auction manager reserves the right to adjust auction volumes of one or more products. For example, the auction manager can elect not to award a contract for the product 2 or product 3 if the minimum prices bidders are willing to accept are too high. In addition, the auction manager could reserve the right to adjust the composition of the durations of the product 1, purchasing longer or shorter duration commitments but restricted to the offers in the auction, or changing the aggregate number of units of the product 1 purchased.

The auction manager reviews applications, and determines each bidder's initial eligibility. The auction manager's review is intended only to ensure that each applicant has the means to meet the obligations that it could incur in the auction. This review is not intended to reject any bidders who can meet the performance qualification criteria specified in the application.

A bidder's initial eligibility in the auction is the number of units that a bidder can win. A bidder's application and the review thereof by the auction manager determines the bidder's eligibility, which is the maximum number of units that the bidder can win in the auction. Eligibility units are used to measure bidder activity across products.

Bidding occurs in a sequence of bid intervals or rounds. Before the start of the first, and each subsequent, bidding period or round, the auction manager posts the prices for each of the products for the upcoming bidding period. The first round prices are the *starting prices.*

Bidders send initial offers for each product at its starting prices through the auction system (which in this example is primarily software but allows for backup phone or instant messaging). A bid contains six quantities, one for each of the six products.

At the close of each round, the auction manager reduces the price of those products for which excess supply remains. A new round begins as soon as the previous round ends. Rounds can be as short as 30 seconds. For example, if a price starts at $75 and falls at 20% per round, the price would reach $60 after one round and $48 after two.

At the end of each bidding period, and immediately before implementing price decrements, the auction manager determines the amount of excess supply of each product. The auction manager reduces price by an amount x if there is excess supply of N or more blocks, and by an amount y if the number of blocks offered for that product is less than N more than the number required. Of course, this is simply an example of a price adjustment rule.

The aggregate number of blocks in a bidder's initial offer cannot exceed its initial eligibility for any one product or in the aggregate. After each price decrement, each bidder can (a) renew its previous round bid, (b) reduce activity for one or more products or (c) "switch" across products, that is, increase by one unit the bid quantity for one product and decrease by one unit the bid quantity offered for another product. However, in each round after the first, a bidder can never submit an offer for a greater number of blocks in aggregate in one round than it did in any previous round. *Once a bidder reduces activity, it can never increase it again during the auction.*

The auction manager ensures that eligibility reductions and/or switches do not leave a previously fully or over-subscribed product under-subscribed. If the auction manager must disallow switches or reductions in offers for one or more products, then the auction manager first adds, product by product, all offers, and determines the minimum number of disallowed activity reductions needed to prevent any product from being under-subscribed. For example, the Auction Manager can first disallow reductions. Then, for bidders whose reductions have been allowed, disallow some switches, randomly or proportionately to the quantities offered. The Auction Manager can, optionally, request bidders to identify each unit it may want to withdraw from one product and switch to any other product or products. The auction manager then randomly orders the bidders, and then randomly assigns provisional winner status to the minimum number of bids needed to be retained for each product to ensure that no product becomes under-subscribed. No reductions in the quantity offered for any product are allowed if by doing so, the product would become under-subscribed.

More specifically, let (x_{r,1}, x_{r,2} ..., x_{r,6}) and (x_{r+1,1}, x_{r+1,2} ..., x _{r+1,6}) denote a bidder's offers in rounds r and r+1. Suppose x_{r,k} < x_{r+1,k} for some k. This switch to product k would be allowed only to the extent that reductions in other offers "free up" enough eligibility. Partial switches can be allowed.

In some embodiments, the Auction Manager can ask each bidder to decompose its bid into a reduction and a switch. The auction manager first decides whether to implement each reduction and then whether to implement each switch. It can implement a switch for a bidder only if it first implements the proposed reduction. (The order of the two operations can also be reversed). Optionally, the Auction Manager may stop the price change part way, using, for example, linear interpolation to infer offers at intermediate prices. Price adjustments are the largest ones that ensure that no insufficient offers for any product is created in the reduction stage. Then, the Auction Manager can disallow switches to ensure that sufficient demand remains for each product. The first step ensures that each bidder can be treated as actually offering its units at the proposed prices, which simplifies later computations.

Bidders can also be permitted to submit "advance" switches/reductions by specifying a price at which to reduce activity or a price difference at which to switch to a specific product; these proxy requests create automatic bid submissions within the system until the specified circumstances are met.

The auction ends when prices fall to the point where no product is over-subscribed. If any product is under-subscribed at the first price array at which no product is over-subscribed, then the auction manager rolls back one increment and allocates the excess based on a random selection among those offers submitted in the penultimate round.

At the close of the auction, the auction manager informs the bidders that the auction has ended and of final prices and allocations. The winning bidders then have a specific number of days (e.g., 10, 30, 90, etc.) to execute the supply agreements, as per the terms of a pre-executed participation agreement.

As will be understood by those familiar with the art, the invention may be embodied in other specific forms without departing from the spirit or essential characteristics thereof. Likewise, the particular naming and division of the modules, agents, managers, functions, procedures, actions, layers, features, attributes, methodologies and other aspects are not mandatory or significant, and the mechanisms that implement the invention or its features may have different names, divisions and/or formats. Furthermore, as will be apparent to one of ordinary skill in the relevant art, various ones of the modules, agents, managers, functions, procedures, actions, layers, features, attributes, methodologies and other aspects of the invention can be implemented as software, hardware, firmware or any combination of the three. Of course, wherever a component of the present invention is implemented as software, the component can be implemented as a script, as a standalone program, as part of a larger program, as a plurality of separate scripts and/or programs, as a statically or dynamically linked library, as a kernel loadable module, as a device driver, and/or in every and any other way known now or in the future to those of skill in the art of computer programming. Additionally, the present invention is in no way limited to implementation in any specific programming language, for any specific network protocol or environment or for any specific operating system or environment. Accordingly, the disclosure of the present invention is intended to be illustrative, but not limiting, of the scope of the invention, which is set forth in the following claims.

## Claims

1. A computer implemented method for conducting a continuous clock auction, the method comprising the steps of:
setting an initial current price for at least one product;
setting an initial duration for each of a plurality of rounds of said continuous clock auction; and
executing the following steps for each of said plurality of rounds of said continuous clock auction, such that as soon as one round ends, a next round begins:
providing each of said plurality of bidders with a current price for a current round for said at least one product;
receiving a bid from each of said plurality of bidders for a quantity of said at least one product at said current price;
responsive to the received bids, determining whether an auction closure rule is satisfied; and
responsive to results of said determining step, performing a step from a group of steps consisting of:
responsive to determining that said auction closure rule is not satisfied, adjusting said current price of said at least one product based on a price adjustment rule, and ending the current round of said continuous clock auction; and
responsive to determining that said auction closure rule is satisfied, closing said continuous clock auction.

2. The method of claim 1 wherein said at least one product comprises a plurality of products, the method further comprising:
setting an initial current price for each of said plurality of products;
during each of said plurality of rounds of said continuous clock auction, providing each of said plurality of bidders with a current price for each of said plurality of products;
during each of said plurality of rounds of said continuous clock auction, receiving a bid from each of said plurality of bidders for a quantity of each of said plurality of products at its corresponding current price;
and responsive to determining that said auction closure rule is not satisfied, adjusting said current price of each of said plurality of products based on said price adjustment rule.

3. The method of claim 1 further comprising:
setting an initial eligibility for each bidder, each initial eligibility specifying a maximum amount of said at least one product that said bidder is eligible to win;
receiving bids from said bidders for a quantity of each of said plurality of products, wherein said quantity is not greater than said eligibility; and
responsive to receiving a bid from a bidder for a quantity less than said eligibility, lowering said eligibility for said bidder to be equal to said bid quantity.

4. The method of claim 1 wherein receiving at least one bid from at least one bidder further comprises a step from for a group of steps consisting of:
receiving a reduction in quantity bid for at least one product; and
receiving a switch in at least one quantity bid for at least one product to at least one other product.

5. The method of claim 1 further comprising:
processing each bid upon receipt.

6. The method of claim 5 further comprising:
informing each of said plurality of bidders upon processing each bid.

7. The method of claim 1 further comprising:
responsive to determining that a received bid would leave at least one product under-subscribed, at least partially disallowing said received bid.

8. The method of claim 1 further comprising:
receiving at least one proxy bid from at least one bidder, wherein said at least one proxy bid specifies at least one condition under which said bidder wishes to execute at least one specific bidding activity.

9. The method of claim 8 further comprising:
receiving at least one proxy bid from at least one bidder specifying at least one of the following:
at least one price at which to reduce a quantity bid for at least one product; and
at least one price differential between at least two products at which to switch at least one quantity bid for at least one product to at least one other product.

10. The method of claim 8 further comprising:
receiving at least one update to at least one proxy bid from at least one bidder.

11. The method of claim 8 further comprising:
implementing received proxy bids.

12. The method of claim 1 further comprising adjusting at least one of the following during said continuous clock auction:
the duration of at least one round of said continuous clock auction; and
an available quantity of at least one product.

13. The method of claim 1 further comprising:
pausing said continuous clock auction.

14. The method of claim 1 further comprising executing communication with bidders via at least one communication media from a group of communication media consisting of:
a computer network;
a telephone network;
wireless electronic communication;
email;
instant messages;
website to browser communication;
software to software communication; and
facsimile.

15. The method of claim 1 further comprising:
during each round, automatically renewing each bid, absent a bidding activity from a corresponding bidder from a group of bidding activities consisting of:
an executed proxy bid instruction;
a bid withdrawal;
a bid reduction; and
a bid quantity switch.

16. The method of claim 1 wherein said continuous clock auction further comprises an auction type from a group of auction types consisting of:
a forward auction; and
a reverse auction.

17. The method of claim 1 further comprising presenting at least one datum to at least one bidder from a group of data consisting of:
an amount of time remaining in the current round;
an indication of an amount of excess demand for at least one product;
at least one projected price for at least one product for at least one future round;
bidding information concerning at least one of the plurality of bidders; and
eligibility information concerning at least one of the plurality of bidders;
a listing of active bidders;
maximum price adjustment between rounds;
minimum price adjustment between rounds;
maximum total auction duration; and
maximum remaining auction duration.

18. At least one computer readable medium containing a computer program product for conducting a continuous clock auction, the computer program product comprising:
program code for setting an initial current price for at least one product;
program code for setting an initial duration for each of a plurality of rounds of said continuous clock auction; and
program code for executing the following steps for each of said plurality of rounds of said continuous clock auction, such that as soon as one round ends, a next round begins:
providing each of said plurality of bidders with a current price for a current round for said at least one product;
receiving a bid from each of said plurality of bidders for a quantity of said at least one product at said current price;
responsive to the received bids, determining whether an auction closure rule is satisfied; and
responsive to results of said determining step, performing a step from a group of steps consisting of:
responsive to determining that said auction closure rule is not satisfied, adjusting said current price of said at least one product based on a price adjustment rule, and ending the current round of said continuous clock auction; and
responsive to determining that said auction closure rule is satisfied, closing said continuous clock auction.

19. The computer program product of claim 18 further comprising:
program code for receiving at least one proxy bid from at least one bidder, wherein said at least one proxy bid specifies at least one condition under which said bidder wishes to execute at least one specific bidding activity.

20. The computer program product of claim 18 further comprising:
program code for, during each round, automatically renewing each bid, absent a bidding activity from a corresponding bidder from a group of bidding activities consisting of:
an executed proxy bid instruction;
a bid withdrawal;
a bid reduction; and
a bid quantity switch.

21. A computer system for conducting a continuous clock auction, the computer system comprising:
means for setting an initial current price for at least one product;
means for setting an initial duration for each of a plurality of rounds of said continuous clock auction; and
means for executing the following steps for each of said plurality of rounds of said continuous clock auction, such that as soon as one round ends, a next round begins:
providing each of said plurality of bidders with a current price for a current round for said at least one product;
receiving a bid from each of said plurality of bidders for a quantity of said at least one product at said current price;
responsive to the received bids, determining whether an auction closure rule is satisfied; and
responsive to results of said determining step, performing a step from a group of steps consisting of:
responsive to determining that said auction closure rule is not satisfied, adjusting said current price of said at least one product based on a price adjustment rule, and ending the current round of said continuous clock auction; and
responsive to determining that said auction closure rule is satisfied, closing said continuous clock auction.

22. The computer system of claim 21 further comprising:
means for receiving at least one proxy bid from at least one bidder, wherein said at least one proxy bid specifies at least one condition under which said bidder wishes to execute at least one specific bidding activity.

23. The computer system of claim 21 further comprising:
means for, during each round, automatically renewing each bid, absent a bidding activity from a corresponding bidder from a group of bidding activities consisting of:
an executed proxy bid instruction;
a bid withdrawal;
a bid reduction; and
a bid quantity switch.
